# EUROPEAN PATENT SPECIFICATION

(11) **EP 1 215 093 B1**
(45) Date of publication and mention of the grant of the patent: **31.08.2005**
(21) Application number: 01000705.2
(22) Date of filing: 04.12.2001
(51) Int. Cl.: B60R 21/34, B60R 19/56

(54) **A vehicle Bumper system**
Fahrzeugstossfängervorrichtung
Système de pare-chocs pour véhicule

(30) Priority: 15.12.2000 US 737359
(43) Date of publication of application: 19.06.2002
(73) Proprietor: Ford Global Technologies, LLC, Dearborn, MI 48126 (US)
(72) Inventor: Schuster, Peter John, Dearborn, MI 48124 (US); Frederick, Gregory Stanley, Sterling Heights, MI 48310 (US); Chou, Shui-Fang, Troy, MI 48098 (US); Bladow, Jeffrey Leonard, West Bloomfield, MI 48322 (US)
(74) Representative: Messulam, Alec Moses

(56) References cited:
- EP-A- 0 557 733
- EP-A- 1 052 151
- DE-A- 4 103 782
- DE-U- 8 711 818
- GB-A- 2 336 811
- US-A- 6 089 628

## Description

The present invention relates to a retractable apparatus for a vehicle bumper which provides for pedestrian impact protection.

It is known to provide a bumper system for a front end of a motor vehicle. Typically, the bumper system includes a bumper beam extending transversely and secured to a forward end of a pair of front rails which extend longitudinally and are spaced transversely. The bumper system also includes a bumper extending transversely and secured to the bumper beam. The bumper system may include a fascia disposed over and covering the bumper. However, the above bumper system suffers from the disadvantage that when a pedestrian impacts the bumper system, a lower leg of the pedestrian may bend under the motor vehicle. In order to combat this problem, a bumper system having a stiffener assembly may be implemented.

US -A- 6,089,628 issued to Schuster discloses a stiffener assembly for the bumper system of a motor vehicle. The '628 patent discloses a stiffener assembly which is mounted to a bumper and movable between an up position and a down position based on the speed of the motor vehicle. The stiffener assembly is operative to prevent a pedestrian's leg from bending under the motor vehicle upon impact. However, the stiffener assembly of the '628 patent moves in a vertical direction between an up position and a down position and does not extend beyond the front of the bumper thereby making it more difficult to implement on a truck. Furthermore, there is a greater need for this device to be implemented in trucks which are more likely to have a pedestrian's leg to bend excessively under the vehicle due to greater vehicle height.

Therefore, there is a need in the art to provide a stiffener assembly which may be mounted on a truck and have a sufficient deployment length to prevent a pedestrian from intruding the underside of the truck.

Accordingly, it is a principle object of the present invention to provide a stiffener assembly which allows for a greater deployment length in the longitudinal direction of the vehicle.

According to a first aspect of the invention there is provided a pedestrian protection apparatus for a vehicle having a bumper member mounted to a vehicle, a stiffener operatively connected to the bumper member and movable between an up position and down position and at least one actuator to move said stiffener between said up and down positions characterised in that the apparatus comprises a cross-member means mounted on the stiffener to distribute loads upon impact, a first linkage assembly disposed between a first end of the stiffener and the bumper member, a second linkage assembly disposed between a second end of the stiffener and the bumper member, the first and second linkage assemblies each have a first locking member and a second locking member and are operable to extend the stiffener and the cross-member means outwardly from the vehicle and that there is an actuation means associated with each of the linkage assemblies each of which is operably connected to a vehicle speed sensing means and is arranged to extend the stiffener, the cross-member means, and the linkage down and outwardly from the vehicle when the vehicle reaches a predetermined speed.

The cross-member may evenly distribute the load on a pedestrian leg or across the stiffener or both.

The vehicle sensing means may be a vehicle speedometer.

Advantageously, the linkage assemblies prevent horizontal displacement of the cross-member means when subjected to a horizontal load less than a predetermined level.

The horizontal displacement may be in a rearward direction with respect to the vehicle.

The first locking member may be an outwardly extending tab and the second locking member may be a recess in which the tab can be engaged to prevent horizontal displacement of the linkage assemblies and the cross-member means.

Alternatively, the first locking member may be a cam and the second locking member may be a follower such that the cam prevents horizontal displacement of the linkage assemblies and cross-member means when subjected to a horizontal load less than a predetermined level.

Preferably, the first and second locking members may disengage and move apart from one another when the cross-member means is subjected to a vertical load.

The actuation means may be a gas cylinder, a rotational actuator disposed within a pivot of each of the first and second linkages, a linear actuator powered by a screw drive or may be a linear actuator powered by a solenoid.

The cross-member means may be a stiffener plate or may be a stiffener beam.

Each of the first and second linkage may comprise a first linkage member mounted to the bumper, a second linkage member mounted to cross-member means, a third linkage member having a first end and a second end, the first end being pivotally mounted to the first linkage member and the second end being pivotally mounted to the second linkage member, a fourth linkage member being pivotally mounted at one end to the first linkage member and being pivotally mounted at an opposite end on the second linkage member and that the actuation means is mounted on the first linkage member and is operable to extend the cross-member means outwardly from the vehicle via the second, third and fourth linkage members such that the third linkage member engages with the fourth linkage member into a locked position preventing horizontal displacement of the cross-member means when subjected to horizontal loads less than a predetermined level.

In which case a locking means may be provided to interconnect the third and fourth linkage members wherein the locking means comprises an outwardly extending tab on each of the third linkage members for engagement with a complimentary recess in a respective co-operating fourth linkage member the locking means being arranged to prevent horizontal displacement of the cross-member means.

Preferably, the locking means interconnecting the third and fourth linkage members may be disengaged when subjected to a vertical load.

According to a second aspect of the invention there is provided a motor vehicle which includes a pedestrian protection apparatus in accordance the first aspect of the invention.

The invention will now be described by way of example with reference to the accompanying drawing of which:-
Figure 1 is a perspective view of the pedestrian protection apparatus according to the present invention, illustrated in operational relationship with a motor vehicle.
Figure 2 is a plan view of the pedestrian protection apparatus of Figure 1.
Figure 3 is a cross sectional view of the pedestrian protection apparatus and a portion of a truck of Figure 1 illustrating the pedestrian protection apparatus in a first mode.
Figure 4 is a cross-sectional view of the pedestrian protection apparatus and a portion of a truck of Figure 1 illustrating the pedestrian protection apparatus in a second mode.
Figure 5 is a cross sectional view of a second embodiment of the pedestrian protection apparatus and a portion of a truck of Figure 1 illustrating.

The present invention provides for an improved pedestrian protection device which may be mounted on a truck yet adequately extends beyond the front of the vehicle when deployed. Furthermore, the present invention provides for increased flexibility in mounting the protective device to a vehicle.

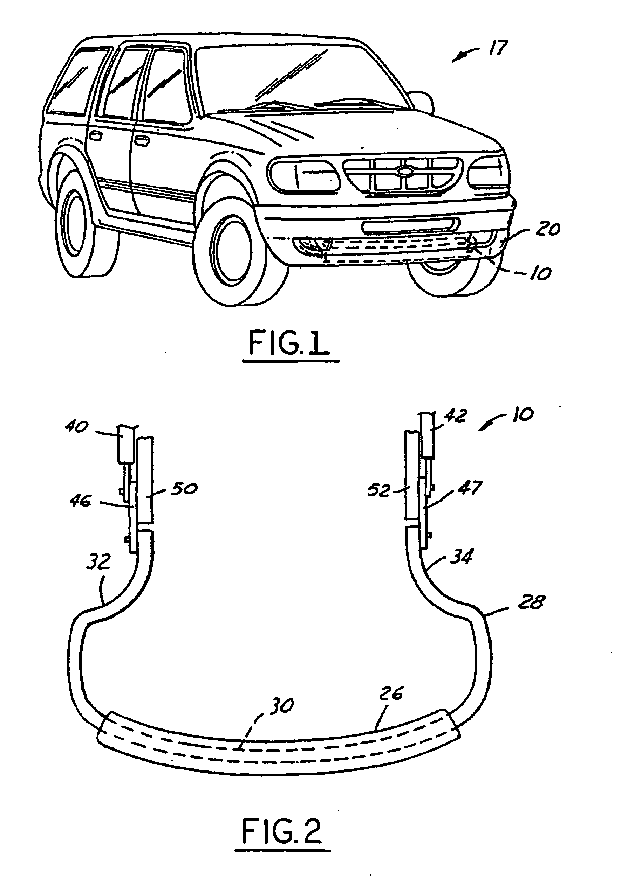

With reference to Figure 1, a perspective view of the present invention 10 is shown as installed on a truck. Trucks are generally positioned high above the ground with a clearance of approximately 610mm (2 feet) between the bumper 12 and ground level 14.

The vertical distance between the bumper 12 and ground level 14 poses the difficulty of adequately mounting a pedestrian protection device 10 to the vehicle 16 in addition to having the pedestrian protection device extend a sufficient distance outward from the underside of the vehicle 17.

The truck includes a bumper system which is generally indicated at 12, at a forward end of the truck. The pedestrian protection device 10 is mounted on or near the bumper 12 of the vehicle.

As illustrated in Figures 2 through 4, the pedestrian protection device 10 includes a bumper beam 16. The bumper beam 16 extends transversely and is secured to the forward end of a pair of front rails 18 by suitable means such as welding.

The bumper beam 16 is generally a hollow member having a generally rectangular shape, is made of a relatively rigid material such as metal and includes a bumper energy absorber 22.

The bumper energy absorber 22 extends transversely and is secured to the bumper beam 16 by suitable means such as fasteners (not shown).

The bumper energy absorber 22 is generally a solid member having a generally rectangular shape, is made of a relatively deformable material such as foam.

The bumper system 20 further includes a fascia 24 extending transversely and downwardly to cover the bumper energy absorber 22.

The fascia 24 is secured to the vehicle structure by suitable means such as fasteners (not shown) and is made of a relatively flexible material such as plastic.

It should be appreciated that the fascia 24 may extend upwardly to form a grille. It should also be appreciated that the bumper system 20 is conventional and known in the art.

Referring to Figure 2, the pedestrian protection device includes a cross member means 26 and a stiffener 28. The cross member means may be formed of a plate which is mounted on the stiffener to prevent a pedestrian's leg from intruding under the vehicle. The cross member means may also be formed of a beam mounted on the stiffener where the width of the beam is substantially greater than the stiffener thereby preventing a pedestrian's lower leg from bending under the vehicle.

Referring now to Figures 2 through 4, the stiffener of the present invention has a front portion extending transversely and an end portion at a first end 32 and a second end 34 where and is formed into a general "C" shape.

The stiffener 28 is made of a generally deformable, energy absorbing material such as plastic. The buckling strength of the stiffener 28 is selected to minimize any potential injury to the lower leg of a pedestrian when impacted by the vehicle. The stiffener 28 is preferably a one-piece, integral, continuous, unitary component.

However, the stiffener 28 could also be made up of multiple parts that are bonded/welded/fastened together. It should be appreciated that the front portion may be curved or arcuate to smoothly transition with the end portion.

As shown in Figures 2, 3, and 4, the pedestrian protection device 10 further includes two linkage assemblies 36, 38 wherein the first linkage assembly 36 is disposed at a first end 32 of the stiffener 28 and the second linkage assembly 38 is disposed at the second end 34 of the stiffener 28.

Each of the first and second linkage assemblies 36, 38 comprises, first, second, third and fourth linkage members 50,30,44,46.

The first linkage member 50 is mounted to the bumper 16 and the second linkage member 30 is mounted to the cross-member means 26 and is formed as end portions of the stiffener 28.

The third linkage member 44 has a first end pivotally mounted to the first linkage member 50 and a second end pivotally mounted to the second linkage member 30.

The fourth linkage member 46 has one end pivotally mounted to the first linkage member 50 and the other end pivotally mounted on the second linkage member 30.

The actuation means 40 is mounted on the first linkage member 50 and is operable to extend the cross-member means 26 outwardly from the vehicle 17 via the second, third and fourth linkage members 30,44,46 such that the third linkage member 44 engages with the fourth linkage member 46 into a locked position preventing horizontal displacement of the cross-member means 26 when subjected to horizontal loads less than a predetermined level which is a level above which the load is greater than that experienced when impacting a pedestrian.

Each linkage assembly 36, 38 is also connected to an actuator 40, 42 which in turn is in communication with a vehicle speed sensing means which in this case is a speedometer. It is preferable to have a pair of actuators 40, 42 such that a first actuator 40 cooperates with the first linkage 36 and a second actuator 42 cooperates with the second linkage 38.

The actuators 40, 42 are preferably spaced transversely and have one end attached to the linkage 36 and the other end attached to the bumper beam 16.

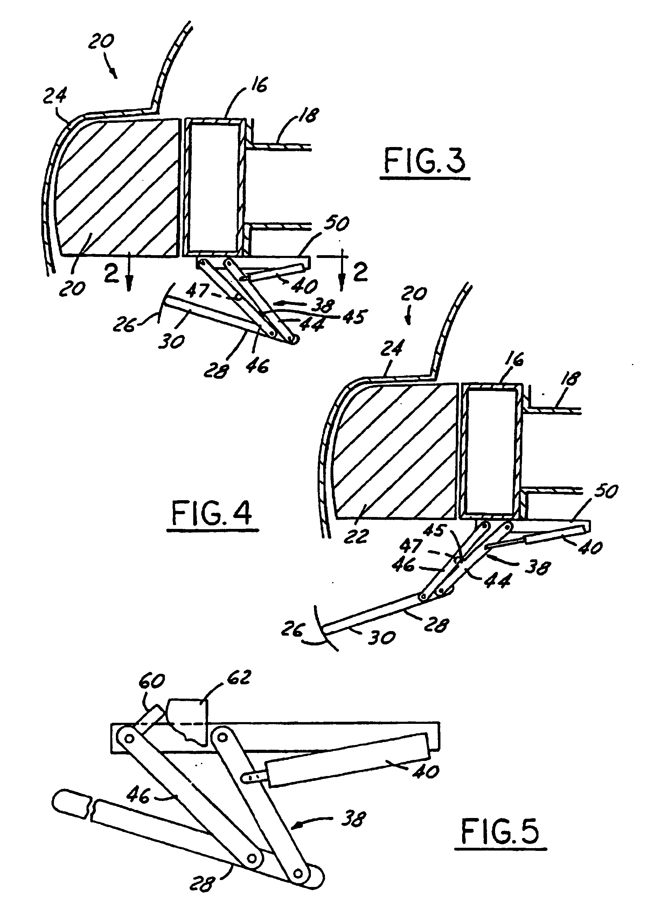

When the vehicle 17 exceeds approximately ten miles per hour, the first actuator 42 and the second actuator 40 preferably but not necessarily may be activated to extend the linkages 36, 38 and the stiffener 28 into a deployed mode as shown in Figure 4. When the vehicle speed decreases such that it is less than or equal to 10 miles per hour, the actuators 42, 40 retract to pull in the linkages 38, 36 and the stiffener 28 thereby maintaining ground clearance and the required approach angle for trucks between the ground line, front wheel and bumper.

It should also be appreciated that the pedestrian protection apparatus is not required in a deployed mode at lower speeds given that there is a reduced tendency of the pedestrian's leg to bend under the vehicle in low speed collisions.

The first and second actuators 40, 42 of the present invention may be linear actuators as shown in figures 3 and 4, or the actuators may be formed of a rotational actuator which is disposed within one of the pivots for each of the linkages 36, 38. The linear actuator may be powered by a screw drive or may be powered by a solenoid. The actuators implemented in Figures 3 and 4 are similar to actuators used in power door locks and are conventional and known in the art.

However, there are several other suitable means such as gas cylinders which may be employed for deploying the pedestrian protection apparatus.

Each linkage includes a locking means to prevent horizontal movement or displacement of the cross-member.

One embodiment of a locking means comprises a first locking member 44 having an outwardly extending tab 45 and a second locking member 46 having a recess, groove, aperture, or slot 47 for receiving the tab 45.

The recess, groove, aperture or slot may be defined entirely by the second locking member 46 or it may be defined by a bracket or other member fastened to the second locking member 46.

The tab 45 of the first locking member 44 fits into the groove 47, aperture, or slot of the second locking member 46 upon deployment of the pedestrian protection apparatus.

The interlocking engagement between the two locking members 44, 46 prevents horizontal displacement of the pedestrian protection apparatus 10 when the apparatus 10 is subjected to horizontal loads less than a predetermined level. The direction of such a load normally being rearwardly and horizontally with respect to the vehicle

Pedestrian impacts generally apply horizontal loads below a predetermined level. Accordingly, the apparatus is designed not to collapse when subjected to such a load but remains intact and prevents a pedestrian's leg from passing underneath the vehicle or truck.

However, in cases where the loads exceed a predetermined level, such as vehicle collision against a wall, a tree or another vehicle, the tab of the first locking member 44 is forced out of the slot of the second locking member 46 to allow the apparatus 10 to flex under the load thereby absorbing energy from the impact.

As shown in Figures 3 and 4, the pedestrian protection apparatus 10 is also capable of flexing when subjected to any vertical loads thereby preventing any damage to the vehicle should the vehicle encounter rough terrain. As the apparatus is pushed upward, the locking members separate thereby releasing the tab 45 from its position in the groove 47, slot, or aperture.

The pedestrian protection apparatus 10 also preferably includes a first bracket 52 and a second bracket 50 which are mounted to the bumper. The first bracket 52 and the second bracket 50 serve as mounting points for the first linkage 36 and the second linkage 38 respectively.

Now referring to Figure 5 and alternative embodiment of a locking means is shown in which first and second locking members 60, 62 are formed by a cam 62 and follower 60 arrangement. In this embodiment, the cam 62 prevents horizontal displacement of the linkage 38 and the stiffener 28 when subjected to a horizontal load under a predetermined level.

When the horizontal load exceeds the predetermined level, the follower 60 will move along the cam 62 to allow the stiffener 28 to move toward the rear of the vehicle.

While specific embodiments of the invention have been illustrated and described herein, it is not intended that these embodiments illustrate and describe all possible forms of the invention and it will be appreciated by those skilled in the art that various alternative embodiments or changes are possible without departing from the scope of the claims.

## Claims

1. A pedestrian protection apparatus for a vehicle having a bumper member (16) mounted to a vehicle (17), a stiffener (28) operatively connected to the bumper member (16) and movable between an up position and down position and at least one actuator (40,42) to move said stiffener(28) between said up and down positions each of said actuators is operably connected to a vehicle speed sensing means **characterised in that** the apparatus comprises a cross-member means (26) mounted on the stiffener (28) to distribute loads upon impact, a first linkage assembly (36) disposed between a first end of the stiffener (28) and the bumper member (16), a second linkage assembly (38) disposed between a second end of the stiffener (28) and the bumper member (16), the first and second linkage assemblies (36 and 38) each have a first locking member (45) and a second locking member (47) and are operable to extend the stiffener (28) and the cross-member means (26) outwardly from the vehicle (17) and that there is an actuation means (40) associated with each of the linkage assemblies (36,38) which is arranged to extend the stiffener (28), the cross-member means (26), and the linkage down and outwardly from the vehicle (17) when the vehicle (17) reaches a predetermined speed.

2. A pedestrian protection apparatus as claimed in claim 1 wherein the first locking member is an outwardly extending tab (45) and the second locking member is a recess (47) in which the tab (45) can be engaged to prevent horizontal displacement of the linkage assemblies (36,38) and the cross-member means (26).

3. A pedestrian protection apparatus as claimed in claim 1 wherein the first locking member is a cam (62) and the second locking member is a follower (60) such that the cam (62) prevents horizontal displacement of the linkage assemblies (36,38) and cross-member means (26) when subjected to a horizontal load less than a predetermined level.

4. A pedestrian protection apparatus as claimed in any of claims 1 to 3 wherein the first and second locking members (45,62 and 47,60) disengage and move apart from one another when the cross-member means (26) is subjected to a vertical load.

5. A pedestrian protection apparatus as claimed in any of claims 1 to 4 wherein the cross-member means (26) is a stiffener plate.

6. A pedestrian protection apparatus as claimed in any of claims 1 to 4 wherein the cross-member means (26) is a stiffener beam.

7. A pedestrian protection apparatus as claimed in any of claims 1 to 6 further **characterised in that** each of the first and second linkage assemblies comprises, a first linkage member (50) mounted to the bumper (16), a second linkage member (30) mounted to cross-member means (26), a third linkage member (44) having a first end and a second end, the first end being pivotally mounted to the first linkage member (50) and the second end being pivotally mounted to the second linkage member (30), a fourth linkage member (46) being pivotally mounted at one end to the first linkage member (50) and being pivotally mounted at an opposite end on the second linkage member (30) and that the actuation means (40) is mounted on the first linkage member (50) and is operable to extend the cross-member means (26) outwardly from the vehicle (17) via the second, third and fourth linkage members (30,44 and 46) such that the third linkage member (44) engages with the fourth linkage member (46) into a locked position preventing horizontal displacement of the cross-member means (26) when subjected to horizontal loads less than a predetermined level.

8. A pedestrian protection apparatus as claimed in claim 7 wherein a locking means is provided to interconnect the third and fourth linkage members (44 and 46) wherein the locking means comprises an outwardly extending tab (45) on each of the third linkage members (44) for engagement with a complimentary recess (47) in a respective co-operating fourth linkage member (46) the locking means being arranged to prevent horizontal displacement of the cross-member means (26).

9. A pedestrian protection apparatus as claimed in claim 7 or in claim 8 wherein the locking means (45,47) interconnecting the third and fourth linkage members (44 and 46) are disengaged when subjected to a vertical load.

10. A motor vehicle **characterised in that** the vehicle includes a pedestrian protection apparatus as claimed in any of claims 1 to 9.

## Patentansprüche

1. Fußgängerschutzvorrichtung für ein Fahrzeug mit einem an einem Fahrzeug (17) angebrachten Stoßstangenglied (16), einem Versteifungselement (28), welches betriebsmäßig mit dem Stoßstangenglied (16) verbunden ist und zwischen einer oberen Stellung und einer unteren Stellung bewegbar ist, und mit wenigstens einem Stellantrieb (40, 42), mittels welchem besagtes Versteifungselement (28) zwischen besagter oberer Stellung und besagter unterer Stellung verstellbar ist, wobei jeder der besagten Stellantriebe (40, 42) betriebsmäßig mit einem Fahrzeuggeschwindigkeitssensormittel verbunden ist,
**dadurch gekennzeichnet, daß** die Vorrichtung Querstrebenmittel (26) aufweist, die am Versteifungselement (28) befestigt sind und Last beim Aufprall verteilen, eine erste Verbindungseinheit (36), welche zwischen einem ersten Ende des Versteifungselements (28) und dem Stoßstangenglied (16) angeordnet ist, eine zweite Verbindungseinheit (38), welche zwischen einem zweiten Ende des Versteifungselements (28) und dem Stoßstangenglied (16) angeordnet ist, wobei die erste und die zweite Verbindungseinheit (36 und 38) je ein erstes Verrastglied (45) und ein zweites Verrastglied (47) aufweist und so betätigbar sind, daß sie das Versteifungselement (28) und die Querstrebe (26) vom Fahrzeug (17) nach außen ausstellen, und daß mit jeder Verbindungseinheit (36, 38) Betätigungsmittel (40) verbunden sind, die so angeordnet sind, daß sie das Versteifungselement (28), die Querstrebenmittel (26) und die Gestänge nach unten und nach vorne vor das Fahrzeug ausstellen, wenn das Fahrzeug (17) eine vorgegebene Geschwindigkeit erreicht.

2. Fußgängerschutzvorrichtung nach Anspruch 1, worin das erste Verrastglied ein nach außen abstehender Lappen (45) ist, und das zweite Verrastglied eine Aussparung (47) ist, in welche der Lappen (45) eingreifen kann, um so ein horizontales Verstellen der Verbindungseinheiten (36, 38) und der Querstrebenmittel (26) zu verhindern.

3. Fußgängerschutzvorrichtung nach Anspruch 1, worin das erste Verrastglied ein Nocken (62) ist, und das zweite Verrastglied ein Nockenfolgeglied (60), so daß der Nocken (62) ein horizontales Verstellen der Verbindungseinheiten (36, 38) und der Querstrebenmittel (26) verhindert, wenn diese einer horizontalen Last ausgesetzt werden, die kleiner als ein vorgegebener Wert ist.

4. Fußgängerschutzvorrichtung nach einem beliebigen der Ansprüche 1 bis 3, worin die ersten und die zweiten Verrastglieder (45, 62 und 47, 60) außer Eingriff gelangen und sich auseinander bewegen, wenn die Querstrebenmittel (26) einer vertikalen Last ausgesetzt werden.

5. Fußgängerschutzvorrichtung nach einem beliebigen der Ansprüche 1 bis 4, worin die Querstrebenmittel (26) eine Versteifungsplatte sind.

6. Fußgängerschutzvorrichtung nach einem beliebigen der Ansprüche 1 bis 4, worin die Querstrebenmittel (26) ein Versteifungsstab sind.

7. Fußgängerschutzvorrichtung nach einem beliebigen der Ansprüche 1 bis 6, außerdem
**dadurch gekennzeichnet, daß** jede der ersten und zweiten Verbindungseinheiten ein an der Stoßstangenglied (16) angebrachtes erstes Verbindungsglied (50) aufweist, ein an den Querstrebenmittlen (26) angebrachtes zweites Verbindungsglied (30), ein drittes Verbindungsglied (44) mit einem ersten Ende und einem zweiten Ende, wobei das erste Ende drehbeweglich am ersten Verbindungsglied (50) und das zweite Ende drehbeweglich am zweiten Verbindungsglied (30) angebracht ist, ein viertes Verbindungsglied (46), welches mit einem Ende drehbeweglich am ersten Verbindungsglied (50) und mit dem gegenüberliegenden Ende drehbeweglich am zweiten Verbindungsglied (30) angelenkt ist, und daß die Betätigungsmittel (40) am ersten Verbindungsglied (50) angebracht sind und so betätigbar sind, daß sie die Querstrebenmittel (26) über die zweiten, dritten und vierten Verbindungsglieder (30, 44 und 46) vom Fahrzeug (17) nach außen ausstellen, so daß das dritte Verbindungsglied (44) mit dem vierten Verbindungsglied (46) in einer Verriegelungsstellung in Eingriff gelangt, in der eine horizontale Bewegung der Querstrebenmittel (26) verhindert wird, wenn diese horizontalen Lasten ausgesetzt werden, die unter einem vorgegebenen Wert liegen.

8. Fußgängerschutzvorrichtung nach Anspruch 7, worin ein Verrastmittel vorgesehen ist, um die dritten und vierten Verbindungsglieder (44 und 46) miteinander zu verbinden, worin die Verrastmittel einen nach außen abstehenden Lappen (45) an jedem der dritten Verbindungsglieder (44) aufweisen, der in eine komplementäre Aussparung (47) in einem entsprechenden, mit ihm zusammenwirkenden vierten Verbindungsglied (46) eingreift, wobei die Verrastmittel so angeordnet sind, daß eine horizontale Bewegung der Querstrebenmittel (26) verhindert wird.

9. Fußgängerschutzvorrichtung nach Anspruch 7 oder 8, worin die die dritten und vierten Verbindungsglieder (44 und 46) miteinander verbindenden Verrastmittel (45, 47) außer Eingriff miteinander gebracht werden, wenn sie einer vertikalen Last ausgesetzt werden.

10. Kraftfahrzeug, **dadurch gekennzeichnet, daß** das Fahrzeug eine Fußgängerschutzvorrichtung nach einem beliebigen der Ansprüche 1 bis 9 aufweist.

## Revendications

1. Un appareil de protection de piétons pour un véhicule possédant un élément de pare-chocs (16) monté sur un véhicule (17), un contrefort (28) opérationnellement couplé avec l'élément de pare-chocs (16) et déplaçable entre une position supérieure et une position inférieure et au moins un actionneur (40, 42) pour déplacer ledit contrefort (28) entre lesdites positions supérieure et inférieure, chacun desdits actionneurs (40, 42) étant opérationnellement couplé avec un dispositif de détection de vitesse de véhicule, **caractérisé en ce que** l'appareil comprend un dispositif d'entretoise (26) monté sur le contrefort (28) pour distribuer les charges lors d'un impact, un premier assemblage de liaison (36) monté entre une première extrémité du contrefort (28) et l'élément de pare-chocs (16), un deuxième assemblage de liaison (38) monté entre une deuxième extrémité du contrefort (28) et l'élément de pare-chocs (16), les premier et deuxième assemblages de liaison (36 et 38) comprenant chacun un premier élément de verrouillage (45) et un deuxième élément de verrouillage (47) et fonctionnant pour étendre le contrefort (28) et le dispositif d'entretoise (26) vers l'extérieur du véhicule (17), ainsi qu'en ce qu'un dispositif de commande (40) associé avec chacun des assemblages de liaison (36, 38) est adapté pour étendre le contrefort (28), le dispositif d'entretoise (26) et la liaison vers le bas et l'extérieur du véhicule (17) lorsque le véhicule (17) atteint une vitesse prédéterminée.

2. Un appareil de protection de piétons selon la revendication 1, dans lequel le premier dispositif de verrouillage est un onglet en extension vers l'extérieur (45) et le deuxième dispositif de verrouillage est un renfoncement (47) dans lequel l'onglet (45) peut être engagé afin d'empêcher un déplacement horizontal des assemblages de liaison (36, 38) ainsi que du dispositif d'entretoise (26).

3. Un appareil de protection de piétons selon la revendication 1, dans lequel le premier dispositif de verrouillage est une came (62) et le deuxième dispositif de verrouillage est un prolongateur (60), de manière à ce que la came (62) empêche le déplacement horizontal des assemblages de liaison (36, 38) ainsi que du dispositif d'entretoise (26) lorsqu'ils sont assujettis à une charge horizontale inférieure à un niveau prédéterminé.

4. Un appareil de protection de piétons selon l'une quelconque des revendications 1 à 3, dans lequel les premier et deuxième dispositifs de verrouillage (45, 62 et 47, 60) se désengagent et s'écartent l'un de l'autre lorsque le dispositif d'entretoise (26) est assujetti à une charge verticale.

5. Un appareil de protection de piétons selon l'une quelconque des revendications 1 à 4, dans lequel le dispositif d'entretoise (26) est une plaque de contrefort ou de rigidification.

6. Un appareil de protection de piétons selon l'une quelconque des revendications 1 à 4, dans lequel le dispositif d'entretoise (26) est une poutre de contrefort ou de rigidification.

7. Un appareil de protection de piétons selon l'une quelconque des revendications 1 à 6, **caractérisé, en outre, en ce que** chacun des premier et deuxième assemblages de liaison comprend un premier membre de liaison (50) monté sur le pare-chocs (16), un deuxième membre de liaison (30) monté sur le dispositif d'entretoise (26), un troisième membre de liaison (44) possédant une première extrémité et une deuxième extrémité, la première extrémité étant montée de façon pivotante sur le premier membre de liaison (50) et la deuxième extrémité étant montée de façon pivotante sur le deuxième membre de liaison (30), un quatrième membre de liaison (46) monté de façon pivotante à une extrémité sur le premier membre de liaison (50) et monté de façon pivotante à une extrémité opposée sur le deuxième membre de liaison (30), et **en ce que** le dispositif d'activation (40) est monté sur le premier membre de liaison (50) et fonctionne pour étendre le dispositif d'entretoise (26) vers l'extérieur du véhicule (17) au moyen des deuxième, troisième et quatrième membres de liaison (30, 44 et 46) de manière à ce que le troisième membre de liaison (44) s'engage avec le quatrième membre de liaison (46) selon une position de verrouillage empêchant le déplacement horizontal du dispositif d'entretoise (26) lorsqu'il est assujetti à une charge horizontale inférieure à un niveau prédéterminé.

8. Un appareil de protection de piétons selon la revendication 7, dans lequel un dispositif de verrouillage est fourni pour interconnecter les troisième et quatrième membres de liaison (44 et 46), le dispositif de verrouillage comprenant un onglet en extension ou faisant saillie vers l'extérieur (45) monté sur chacun des troisième membres de liaison (44) pour engagement avec un renfoncement complémentaire (47) monté dans un quatrième membre de liaison (46) coopérant respectif, le dispositif de verrouillage étant adapté pour empêcher le déplacement horizontal du dispositif d'entretoise (26).

9. Un appareil de protection de piétons selon la revendication 7 ou la revendication 8, dans lequel le dispositif de verrouillage (45, 47) interconnectant les troisième et quatrième membres de liaison (44 et 46) est désengagé lorsqu'il est soumis à une force verticale.

10. Un véhicule motorisé **caractérisé en ce que** le véhicule comprend un appareil de protection de piétons selon l'une quelconque des revendications 1 à 9.
